# EUROPEAN PATENT APPLICATION

(11) **EP 4 770 107 A1**
(43) Date of publication of application: **01.07.2026**
(21) Application number: 25197004.2
(22) Date of filing: 20.08.2025
(51) Int. Cl.: H04N 23/51, G03B 17/55, H04N 23/52, H04N 23/57

(54) **HEAT SHIELD AND CAMERA HAVING THE SAME**

(30) Priority: 26.12.2024 US 202463738851 P; 25.03.2025 CN 202510355615
(71) Applicant: Getac Technology Corporation, New Taipei City 221009 (TW)
(72) Inventor: LI, Chun-Hsing, 11568 Taipei City (TW); PENG, Cheng-Shih, 11568 Taipei City (TW)
(74) Representative: Viering, Jentschura & Partner mbB Patent- und Rechtsanwälte

(57) **Abstract**

A camera (C) and a heat shield (H) thereof. The camera (C) includes a first housing (100), a second housing (200), and a heat shield (H). The heat shield (H) is mounted on the first housing (100). The heat shield (H) includes a casing body (10) and a latch abutting member (20). The casing body (10) includes two openings (11), a circumferential wall (12), and two limiting portions (13). The two openings **(11)** are formed on two opposite ends of the circumferential wall (12). The two limiting portions (13) are arranged on two opposite sides of the circumferential wall (12). The circumferential wall (12) and the two limiting portions (13) jointly define an accommodating space (CP). The latch abutting member (20) is disposed on one of the two opposite ends of the circumferential wall (12) and positioned near one of the two openings (11).

## Description

### FIELD OF THE INVENTION

The present invention relates to a heat shield and a camera having the same, and more particularly to a heat shield suitable for being mounted on an in-vehicle camera, and an in-vehicle camera having the heat shield.

### BACKGROUND OF THE INVENTION

Currently, cameras are commonly used for capturing and monitoring footage, which can be utilized for computational analysis or stored as evidence of real-time events to ensure personal safety. While driving, an in-vehicle camera is typically installed near the rearview mirror by users for ensuring that the driving process is properly recorded.

However, the in-vehicle camera often overheats due to its position being easily exposed to sunlight or affected by high-speed operation. When the driver touches a casing of the overheated camera to adjust, e.g., the camera angle, it may cause inconvenience and discomfort during the adjustment process.

### SUMMARY OF THE INVENTION

In response to the above-referenced technical inadequacy, the present invention provides a heat shield and a camera equipped with the heat shield, which effectively isolates and dissipates the heat generated by the camera during operation, thereby preventing discomfort of the user when adjusting the camera due to overheating.

In order to solve the above-mentioned problems, one of the technical aspects adopted by the present invention is to provide a heat shield that is suitable for being mounted on a camera. The heat shield includes a casing body and a latch abutting member. The casing body includes two openings, a circumferential wall, and two limiting portions. The two openings are formed on two opposite ends of the circumferential wall. The two limiting portions are arranged on two opposite sides of the circumferential wall. The circumferential wall and the two limiting portions jointly define an accommodating space. The latch abutting member is disposed on one of the two opposite ends of the circumferential wall and positioned near one of the two openings.

Preferably, the casing body further includes at least one through hole that is formed on the circumferential wall.

Preferably, the circumferential wall forms a C shape.

Preferably, the casing body and the latch abutting member are integrally formed.

Preferably, the circumferential wall defines a central axis that passes through the accommodating space, the latch abutting member includes a stopping portion, and the stopping portion protrudes from the circumferential wall and extends in a direction that is perpendicular to the central axis.

Preferably, the circumferential wall defines a central axis that passes through the accommodating space, the casing body includes at least one blocking portion disposed at one of the two openings, and the at least one blocking portion protrudes from the circumferential wall and extends in a direction that is perpendicular to the central axis.

Preferably, the casing body further includes a plurality of ribs that are spaced apart on an inner surface of the circumferential wall.

Preferably, the two limiting portions of the casing body are spaced apart from each other by a gap, and a lens positioning area is formed between the two limiting portions.

Preferably, each of the two limiting portions has an intermediate section that forms a curved shape.

Preferably, the circumferential wall has cutting surfaces that are positioned at the two limiting portions.

Preferably, the latch abutting member is positioned at a location that is opposite to the lens positioning area.

Preferably, the latch abutting member includes two stopping portions that are arranged opposite to each other and parallel to the casing body, the latch abutting member defines a latching space through the two stopping portions, and the latching space is in spatial communication with the accommodating space.

Preferably, the latch abutting member includes a mouth portion, the mouth portion is formed between two ends of the two stopping portions, and the mouth portion has an opening direction that is the same as that of the lens positioning area.

In order to solve the above-mentioned problems, another one of the technical aspects adopted by the present invention is to provide a camera, which includes a first housing, a second housing, and the above-mentioned heat shield. The heat shield is mounted on the first housing.

Preferably, the first housing is disposed in the accommodating space, and the latch abutting member abuts against a top surface of the first housing.

Preferably, the heat shield and the first housing are made of different materials.

Preferably, the heat shield is made of plastic, and the first housing is made of metal.

Preferably, the casing body further includes a plurality of ribs that are spaced apart on an inner surface of the circumferential wall, and a height of the plurality of ribs protruding from the inner surface of the circumferential wall gradually increases from a top surface of the first housing toward the second housing.

Preferably, the casing body further includes a plurality of ribs that are spaced apart on an inner surface of the circumferential wall, and the plurality of ribs abut against the first housing and define a flow-guiding space.

Preferably, the two limiting portions of the casing body are spaced apart from each other by a gap, and the gap is smaller than a maximum outer diameter of the first housing.

Preferably, the first housing includes a positioning protrusion, the casing body includes a groove that is recessed at the end of the circumferential wall that is opposite to the latch abutting member, and a shape of the groove corresponds to a shape of the positioning protrusion.

Therefore, in the heat shield and the camera having the same provided by the present invention, by virtue of "the two limiting portions being arranged on two opposite sides of the circumferential wall, and the circumferential wall and the two limiting portions jointly defining an accommodating space," and "the latch abutting member being disposed on one of the two opposite ends of the circumferential wall and being positioned near one of the two openings," the heat generated by the camera during operation is effectively isolated and dissipated, thereby preventing discomfort of the user caused by overheating when adjusting the camera.

These and other aspects of the present invention will become apparent from the following description of the embodiment taken in conjunction with the following drawings and their captions.

### BRIEF DESCRIPTION OF THE DRAWINGS

The described embodiments may be better understood by reference to the following description and the accompanying drawings, in which:
FIG. 1 is a schematic perspective view of a heat shield according to a first embodiment of the present invention;
FIG. 2 is a schematic front view of the heat shield according to the first embodiment of the present invention;
FIG. 3 is a schematic front view of a heat shield according to another embodiment of the present invention;
FIG. 4 is a schematic enlarged cross-sectional view taken along line IV-IV of FIG. 2;
FIG. 5 is a schematic top view of the heat shield according to the first embodiment of the present invention;
FIG. 6 is a schematic perspective view of a camera according to a second embodiment of the present invention;
FIG. 7 is a schematic enlarged cross-sectional view taken along line VII-VII of FIG. 6;
FIG. 8 is a partial schematic bottom view of the camera according to the second embodiment of the present invention; and
FIG. 9 is a partial schematic back view of the camera according to the second embodiment of the present invention.

### DETAILED DESCRIPTION OF THE EXEMPLARY EMBODIMENTS

The present invention is more particularly described in the following examples that are intended as illustrative only since numerous modifications and variations therein will be apparent to those skilled in the art. Like numbers in the drawings indicate like components throughout the views. As used in the description herein and throughout the claims that follow, unless the context clearly dictates otherwise, the meaning of "a," "an" and "the" includes plural reference, and the meaning of "in" includes "in" and "on." Titles or subtitles can be used herein for the convenience of a reader, which shall have no influence on the scope of the present invention.

The terms used herein generally have their ordinary meanings in the art. In the case of conflict, the present document, including any definitions given herein, will prevail. The same thing can be expressed in more than one way. Alternative language and synonyms can be used for any term(s) discussed herein, and no special significance is to be placed upon whether a term is elaborated upon or discussed herein. A recital of one or more synonyms does not exclude the use of other synonyms. The use of examples anywhere in this specification including examples of any terms is illustrative only, and in no way limits the scope and meaning of the present invention or of any exemplified term. Likewise, the present invention is not limited to various embodiments given herein. Numbering terms such as "first," "second", or "third" can be used to describe various components, signals, or the like, which are for distinguishing one component/signal from another one only, and are not intended to, nor should be construed to impose any substantive limitations on the components, signals, or the like.

### [First Embodiment]

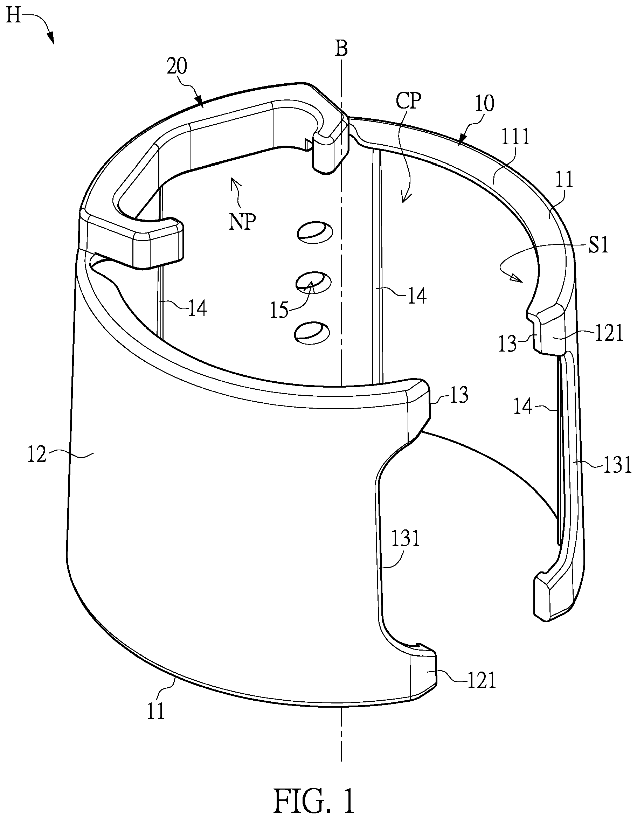

Reference is made to FIG. 1. The first embodiment of the present invention provides a heat shield H, which includes a casing body 10 and a latch abutting member 20. In the first embodiment, the casing body 10 and the latch abutting member 20 are integrally formed. In practical use, the heat shield H can be mounted on a camera, and the heat shield H is configured to isolate and dissipate the heat generated by the camera during operation.

Specifically, the casing body 10 includes two openings 11, a circumferential wall 12, and two limiting portions 13. The two openings 11 are formed on two opposite ends of the circumferential wall 12, and the two limiting portions 13 are arranged on two opposite sides of the circumferential wall 12. The casing body 10 can define an accommodating space CP through the circumferential wall 12 and the two limiting portions 13. The camera can be fitted into the accommodating space CP of the heat shield H, and the circumferential wall 12 of the heat shield H surrounds and encloses the camera to achieve a heat insulation effect.

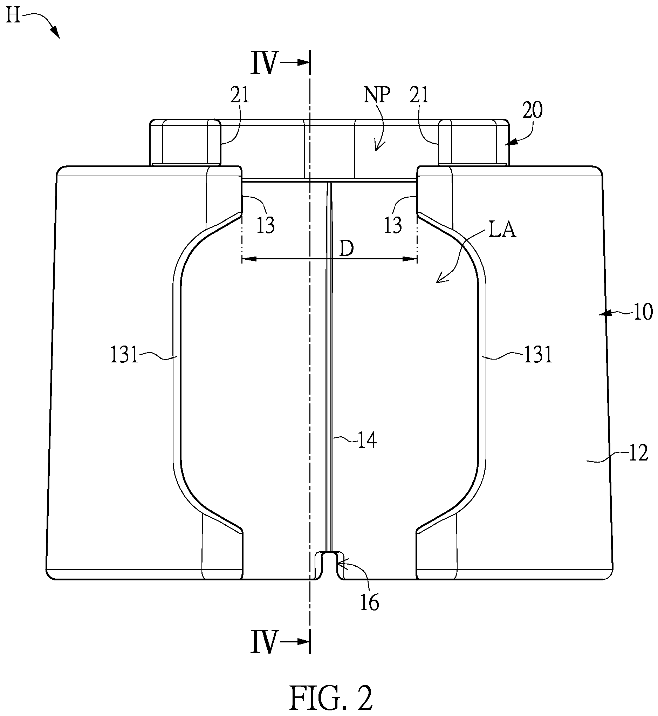

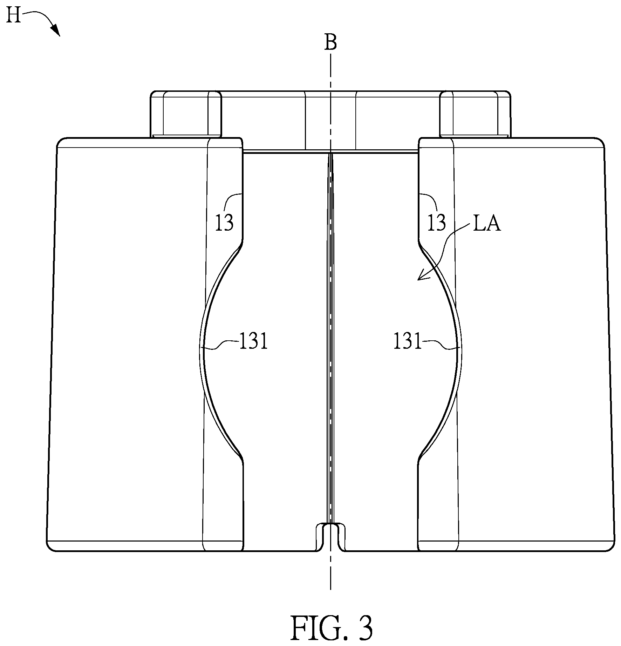

Referring to FIG. 1 and FIG. 2, in the first embodiment, the circumferential wall 12 forms a C shape. The circumferential wall 12 has cutting surfaces 121 that are located at the two limiting portions 13, and the circumferential wall 12 defines a central axis B that passes through the accommodating space CP. There is a gap D between the two limiting portions 13, and the two limiting portions 13 form a lens positioning area LA therebetween. Each of the two limiting portions 13 has an intermediate section 131 that forms a curved shape. In the first embodiment, the intermediate section 131 is arc-shaped. Referring to FIG. 3, in another embodiment, each of the intermediate sections 131 of the two limiting portions 13 can form a circular arc shape. However, the aforementioned description for the shape of the intermediate section 131 is merely an example, and is not meant to limit the scope of the present invention. In practical use, a lens of the camera can be placed in the lens positioning area LA formed by the two limiting portions 13, and the cutting surface 121 can prevent a field of view of the camera from being obstructed, thereby maintaining a wide viewing angle.

Referring to FIG. 1, FIG. 2, and FIG. 4, the casing body 10 further includes a plurality of ribs 14, at least one through hole 15, and a groove 16. The plurality of ribs 14 are spaced apart on an inner surface S1 of the circumferential wall 12, and the plurality of ribs 14 protrude from the inner surface S1. The at least one through hole 15 is formed on the circumferential wall 12. The groove 16 is recessed at the end of the circumferential wall 12 that is opposite to the latch abutting member 20. In practical use, a flow-guiding space is formed between the circumferential wall 12 and the camera through the plurality of ribs 14, so as to help dissipate heat from the camera. Furthermore, the position of the at least one through hole 15 corresponds to the position of an indicator light of the camera, so that the indicator light of the camera can be displayed.

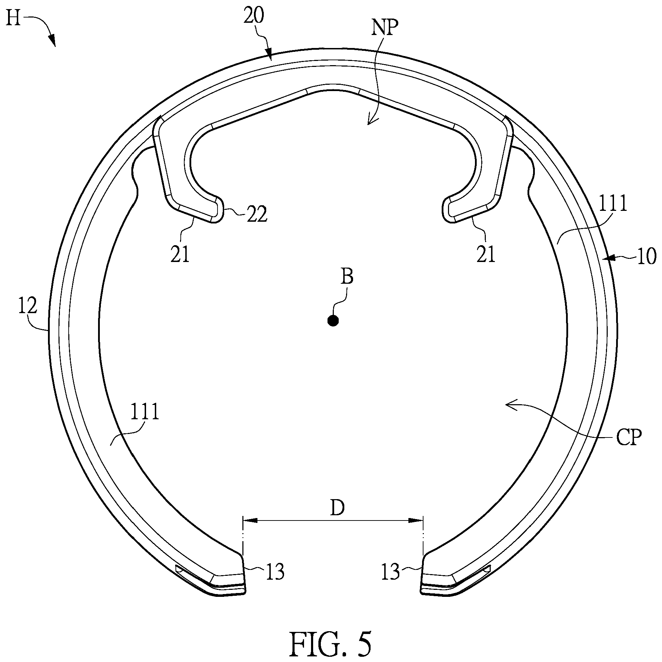

Referring to FIG. 1 and FIG. 5, the latch abutting member 20 is arranged on one of the two opposite ends of the circumferential wall 12 and close to one of the two openings 11. When viewing the heat shield H from above, the latch abutting member 20 is positioned opposite to the two limiting portions 13 (i.e., opposite to the lens positioning area LA). Furthermore, the latch abutting member 20 is located at a position far from the two limiting portions 13 and the lens positioning area LA.

Furthermore, the casing body 10 includes at least one blocking portion 111 that is disposed at one of the openings 11. The at least one blocking portion 111 protrudes from the circumferential wall 12 and extends in a direction that is perpendicular to the central axis B of the circumferential wall 12 (i.e., extends in a radial direction of the central axis B). Specifically, the blocking portion 111 extends inward from the circumferential wall 12 toward the accommodating space CP. The blocking portion 111 can prevent the camera from being overfitted. In the first embodiment, a plurality of blocking portions 111 are provided and arranged opposite to each other as an example, but the present invention is not limited thereto.

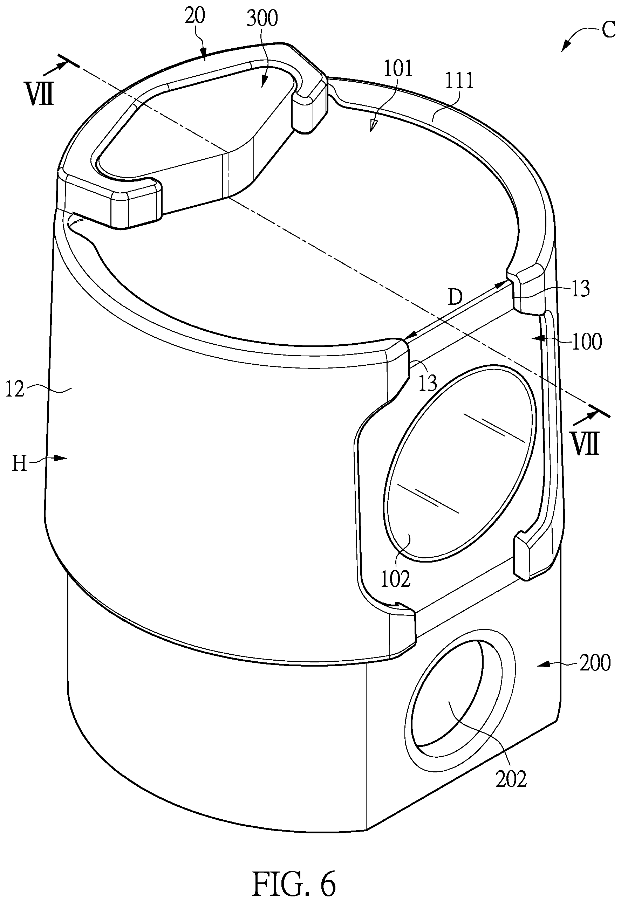

Specifically, the latch abutting member 20 of the heat shield H includes two stopping portions 21 and a mouth portion 22. The two stopping portions 21 are arranged opposite to each other and parallel to the casing body 10. The latch abutting member 20 defines a latching space NP through the two stopping portions 21, with the latching space NP being in spatial communication with the accommodating space CP. Specifically, an extension direction of the two stopping portions 21 is parallel to a cross-section of the casing body 10, which is perpendicular to the central axis B. In other words, the two stopping portions 21 are perpendicular to the central axis B. The mouth portion 22 is formed between two ends of the two stopping portions 21, and the mouth portion 22 has an opening direction that is the same as that of the lens positioning area LA. The two stopping portions 21 of the latch abutting member 20 can prevent the camera from being displaced when the camera is overfitted. Reference is made to FIG. 6. The camera C has a power connector or a fixing member 300, and the power connector or the fixing member 300 can be latched into the latching space NP to prevent the camera C from rotating.

In other embodiments, the latch abutting member 20 has a stopping portion 21. The stopping portion 21 protrudes from the circumferential wall 12 of the casing body 10 and extends in the direction that is perpendicular to the central axis B of the circumferential wall 12 (i.e., extends in the radial direction of the central axis B).

### [Second Embodiment]

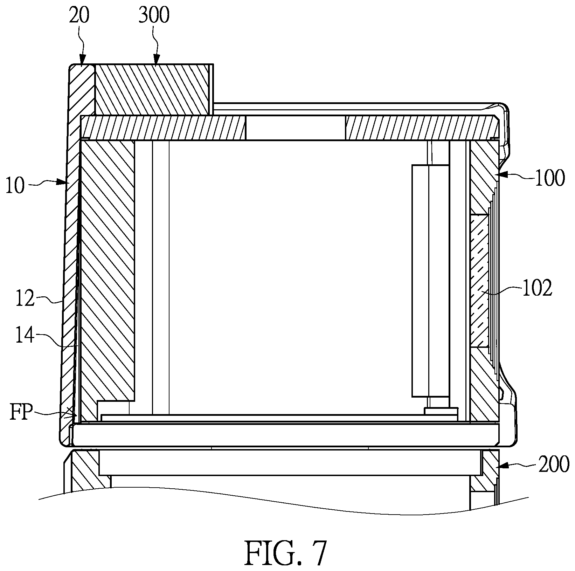

Reference is made to FIG. 6 to FIG. 9. A second embodiment of the present invention provides a camera C, which includes a first housing 100, a second housing 200, and a heat shield H. The second housing 200 is pivotally connected to the first housing 100 and is rotatable relative to the first housing 100. The heat shield H in the second embodiment is the same as that in the first embodiment, and the heat shield H is disposed on the first housing 100. Structural descriptions of the heat shield H are as explained in the first embodiment, and will not be reiterated herein. The heat shield H and the first housing 100 are made of different materials. For example, the heat shield H can be made of plastic, while the first housing 100 can be made of metal. The metal material of the first housing 100 can effectively dissipate the heat generated by the camera C during operation, while the plastic material of the heat shield H can effectively isolate the heat generated by the camera C. Therefore, when a user contacts the plastic heat shield H to adjust the angle of a lens 102 of the camera C, the overheated first housing 100 will not cause inconvenience or discomfort to the user.

Referring to FIG. 6, in the second embodiment, the first housing 100 of the camera C is cylindrical, and the lens 102 of the camera C is mounted on one side of the first housing 100. The lens 102 of the camera C is positioned between the two limiting portions 13 (i.e., positioned in the lens positioning area LA) of the heat shield H. Specifically, the first housing 100 of the camera C is disposed within the accommodating space CP of the heat shield H. Through the plurality of blocking portions 111 abutting against a top surface 101 of the first housing 100, the heat shield H limits and positions the first housing 100. In other embodiments, the plurality of blocking portions 111 of the heat shield H can be omitted, and the function of limiting and positioning the first housing 100 can be achieved through the latch abutting member 20 abutting against the top surface 101 of the first housing 100.

In the second embodiment, in order to facilitate the stability and accuracy of the configuration of the heat shield H on the first housing 100, the gap D between the two limiting portions 13 of the casing body 10 is less than a maximum outer diameter K of the first housing 100.

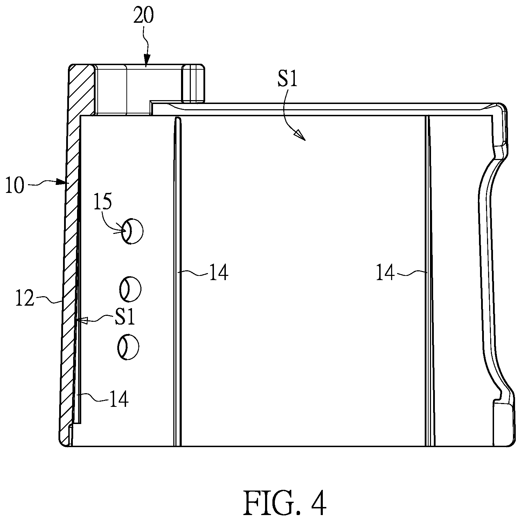

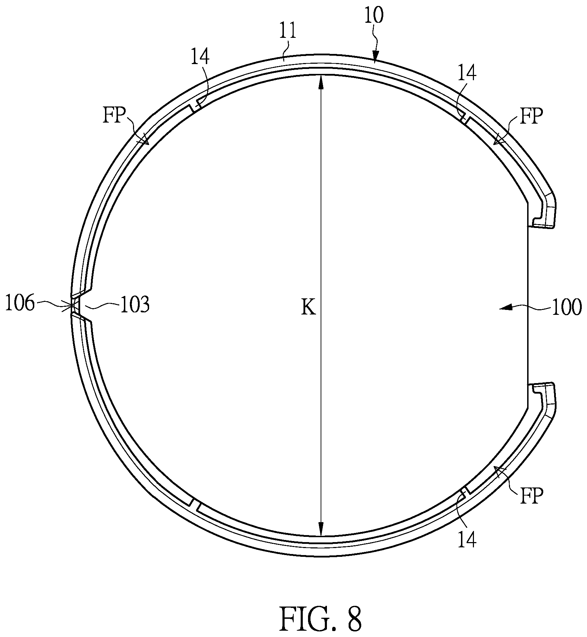

Referring to FIG. 4, FIG. 6, FIG. 7, and FIG. 8, where FIG. 8 shows a partial view of the camera C with the second housing 200 omitted, a height of the plurality of ribs 14 protruding from the inner surface S1 of the circumferential wall 12 gradually increases from the top surface 101 of the first housing 100 towards the second housing 200. Therefore, when the plurality of ribs 14 of the casing body 10 abut against the first housing 100, a flow-guiding space FP is defined between the casing body 10 of the heat shield H and the first housing 100 of the camera C. In practical use, airflow can circulate within the flow-guiding space FP to help dissipate heat from the camera C.

In another embodiment, the second housing 200 of the camera C includes another lens 202. The second housing 200 is made of metal. Since the heat shield H does not cover the second housing 200 of the camera C, the heat can be dissipated through the second housing 200.

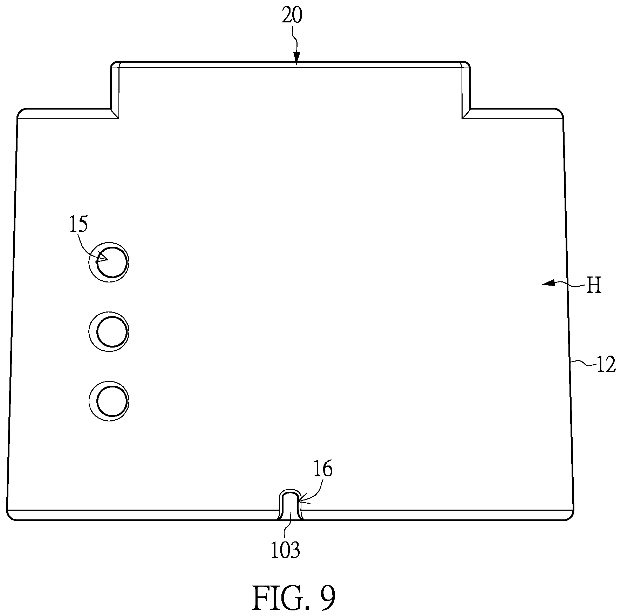

Referring to FIG. 9, in order to improve the ease and accuracy of the configuration of the heat shield H on the first housing 100, the first housing 100 further includes a positioning protrusion 103, and the casing body 10 includes a groove 16. The groove 16 is recessed at the end of the circumferential wall 12 that is opposite to the latch abutting member 20, and a shape of the groove 16 corresponds to a shape of the positioning protrusion 103.

In the heat shield H and the camera C having the same provided by the present invention, by virtue of "the two limiting portions 13 being arranged on two opposite sides of the circumferential wall 12, and the circumferential wall 12 and the two limiting portions 13 jointly defining an accommodating space CP," and "the latch abutting member 20 being disposed on one of the two opposite ends of the circumferential wall 12 and being positioned near one of the two openings 11," the heat generated by the camera C during operation is effectively isolated and dissipated, thereby preventing discomfort of the user caused by overheating when adjusting the camera C.

Furthermore, the heat shield H of the present invention can help dissipate heat from the camera C through the flow-guiding space FP formed by the plurality of ribs 14 on the casing body 10 abutting against the first housing 100 of the camera C.

The embodiments were chosen and described in order to explain the principles of the invention and their practical application so as to enable others skilled in the art to utilize the invention and various embodiments and with various modifications as are suited to the particular use contemplated.

## Claims

1. A heat shield (H) suitable for being mounted on a camera (C), **characterized by** comprising:
a casing body (10) comprising two openings (11), a circumferential wall (12), and two limiting portions (13), wherein the two openings (11) are formed on two opposite ends of the circumferential wall (12), the two limiting portions (13) are arranged on two opposite sides of the circumferential wall (12), and the casing body (10) defines an accommodating space (CP) through the circumferential wall (12) and the two limiting portions (13); and
a latch abutting member (20) disposed on one of the two opposite ends of the circumferential wall (12) and positioned near one of the two openings (11).

2. The heat shield according to claim 1, wherein the casing body (10) further comprises at least one through hole (15) that is formed on the circumferential wall (12).

3. The heat shield according to any of claims 1 and 2, wherein the circumferential wall (12) forms a C shape.

4. The heat shield according to any of claims 1-3, wherein the casing body (10) and the latch abutting member (20) are integrally formed.

5. The heat shield according to any of claims 1-4, wherein the circumferential wall (12) defines a central axis (B) that passes through the accommodating space (CP), the latch abutting member (20) comprises a stopping portion (21), and the stopping portion (20) protrudes from the circumferential wall (12) and extends in a direction that is perpendicular to the central axis (B).

6. The heat shield according to any of claims 1-5, wherein the circumferential wall (12) defines a central axis (B) that passes through the accommodating space (CP), the casing body (10) comprises at least one blocking portion (111) disposed at one of the two openings (11), and the at least one blocking portion (111) protrudes from the circumferential wall (12) and extends in a direction that is perpendicular to the central axis (B).

7. The heat shield according to any of claims 1-6, wherein the casing body (10) further comprises a plurality of ribs (14) that are spaced apart on an inner surface (S1) of the circumferential wall (12).

8. The heat shield according to any of claims 1-7, wherein a gap (D) is formed between the two limiting portions (13), and the two limiting portions (13) form a lens positioning area (LA) therebetween; and wherein each of the two limiting portions (13) has an intermediate section (131) that forms a curved shape, and the circumferential wall (12) has cutting surfaces (121) that are positioned at the two limiting portions (13).

9. The heat shield according to any of claims 5-8, wherein the latch abutting member (20) is positioned opposite to the lens positioning area (LA), the latch abutting member (20) comprises two stopping portions (21) that are arranged opposite to each other and parallel to the casing body (10), the latch abutting member (20) defines a latching space (NP) through the two stopping portions (21), and the latching space (NP) is in spatial communication with the accommodating space (CP).

10. The heat shield according to any of claims 5-9, wherein the latch abutting member (20) comprises a mouth portion (22), the mouth portion (22) is formed between two ends of the two stopping portions (21), and the mouth portion (22) has an opening direction that is the same as that of the lens positioning area (LA).

11. A camera (C), comprising:
a first housing (100);
a second housing (200) pivotally connected to the first housing (100); and
the heat shield (H) as claimed in any of claims 1 to 10, wherein the heat shield (H) is mounted on the first housing (100).

12. The camera according to claim 11, wherein the first housing (100) is disposed in the accommodating space (CP), and the latch abutting member (20) abuts against a top surface (101) of the first housing (100); wherein the heat shield (H) and the first housing (100) are made of different materials.

13. The camera according to claim 11, wherein the plurality of ribs (14) abut against the first housing (100) and define a flow-guiding space (FP); wherein a height of the plurality of ribs (14) protruding from the inner surface (S1) of the circumferential wall (12) gradually increases from a top surface (101) of the first housing (100) toward the second housing.

14. The camera according to any of claims 11-13, wherein the two limiting portions (13) of the casing body (10) are spaced apart from each other by a gap (D), and the gap (D) is smaller than a maximum outer diameter (K) of the first housing (100).

15. The camera according to any of claims 11-14, wherein the first housing (100) comprises a positioning protrusion (103), the casing body (10) comprises a groove (16) that is recessed at an end of the circumferential wall (12) that is opposite to the latch abutting member (20), and a shape of the groove (16) corresponds to a shape of the positioning protrusion (103).
